(19) Europäisches Patentamt
European Patent Office
Office européen des brevets

(11) **EP 3 977 310 B1**

(12) # EUROPEAN PATENT SPECIFICATION

(45) Date of publication and mention
of the grant of the patent:
**05.07.2023  Bulletin 2023/27**

(21) Application number: **20728767.3**

(22) Date of filing: **28.05.2020**

(51) International Patent Classification (IPC):
**G06F 16/2458** *(2019.01)*   **G06F 16/21** *(2019.01)*
**G06F 16/36** *(2019.01)*   **G06F 40/284** *(2020.01)*
**G06F 40/30** *(2020.01)*

(52) Cooperative Patent Classification (CPC):
**G06F 16/2477; G06F 16/219; G06F 16/367;
G06F 40/284; G06F 40/30**

(86) International application number:
**PCT/EP2020/064934**

(87) International publication number:
**WO 2020/239965 (03.12.2020 Gazette 2020/49)**

(54) **METHOD FOR CONSOLIDATING DYNAMIC KNOWLEDGE ORGANIZATION SYSTEMS**

VERFAHREN ZUR KONSOLIDIERUNG VON DYNAMISCHEN WISSENSORGANSYSTEMEN

PROCÉDÉ DE CONSOLIDATION DE SYSTÈMES D'ORGANISATION DE CONNAISSANCES
DYNAMIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2019  LU 101238**

(43) Date of publication of application:
**06.04.2022  Bulletin 2022/14**

(73) Proprietor: **Luxembourg Institute of Science and
Technology (LIST)
4362 Esch-sur-Alzette (LU)**

(72) Inventors:
• **DA SILVEIRA, Marcos**
**4000 Liège (BE)**
• **DOMINGOS CARDOSO, Silvio**
**2521 Luxembourg (LU)**
• **PRUSKI, Cédric**
**57000 Metz (FR)**

(74) Representative: **Wagner, Jean-Paul
Corax IP
2, rue Wilson
2732 Luxembourg (LU)**

(56) References cited:
**LU-B1- 93 179**

• **"Efficient management of biomedical ontology
versions" In: KIRSTEN T.HARTUNG M.GROSS
A.RAHM E.: "On the Move to Meaningful Internet
Systems : OTM2009 Workshops", 2009, Springer
Berlin Heidelberg, XP002797134, pages 574-583,
cited in the application page 574, paragraph 2 -
page 575, last paragraph page 576, paragraph 2
- page 578, last paragraph**
• **CARDOSO SILVIO DOMINGOS ET AL:
"Leveraging the Impact of Ontology Evolution on
Semantic Annotations", 4 November 2016
(2016-11-04), European Knowledge Acquisition
Workshop; [LECTURE NOTES IN COMPUTER
SCIENCE], SPRINGER, BERLIN, HEIDELBERG,
PAGE(S) 68 - 82, XP047361956, ISBN:
978-3-642-17318-9 [retrieved on 2016-11-04] cited
in the application abstract page 73, paragraph 1
- page 74, last paragraph; figure 3**
• **HARTUNG M.GROSS A.RAHM E.: "Conto-diff:
generation of complex evolution mappings for
life science ontologies", JOURNAL OF
BIOMEDICAL INFORMATICS, vol. 46, no. 1, 2013,
pages 15-32, XP002797135, cited in the
application**

## Description

### Technical field

The present invention lies in the field of data structures for efficient big data management. In particular, the invention deals with consolidating multiple versions of dynamic knowledge organization systems, for reducing their overall storage space and for providing improved searchability thereof.

### Background of the invention

Knowledge Organization Systems, KOS, are data structures that organize data in a specific domain, which may for example be a technical domain or a life science domain, according to hierarchically organized concepts having specific attributes. Typically, such data may be structured in a hierarchical graph or tree and stored for example in a database. A parent node of the tree represents a more generic concept than its child nodes, which therefore represent a more specific concept in the corresponding knowledge domain.

In information science, an ontology is a specific example of a KOS, which formally names and defines types, attributes and interrelationships of the entities that really exist for a particular domain of discourse or knowledge domain in a formal way. As the knowledge in any domain evolves due to new discoveries, due to new understanding of concepts and generally following further research in a domain, different versions of the same ontology or KOS are formed over time.

Ontologies offer the means to make the semantics of data explicit by annotating available data with concept labels that make it possible for computers to understand the annotated data. This is the case, for instance, in the health sector where patient data that are stored in electronic health records, EHR, are associated with concept codes or terms borrowed from standard controlled terminologies, such as the International Classification of Diseases, ICD, or SNOMED CT, facilitating data exchange between different systems. However, the dynamic nature of domain knowledge forces revision of the ontologies. As concepts in an ontology evolve with time, a mismatch may arise between the concepts of an earlier version, which was used to annotate data, and the evolved concepts of a more recent version of the same ontology, which may be used by an automated system to interpret the annotated data.

Resorting to the latest version of the ontology is necessary to keep pace with the evolution of the knowledge domain, but may thus render previously annotated data difficult to use or useless. On the other hand, keeping multiple independent versions of the same ontology involves a large amount of data and does not necessarily provide a comprehensive view of the evolution of the knowledge domain to an artificially intelligent agent of other software application.

### Technical problem to be solved

It is an objective of the present invention to provide a method and system which overcome at least some of the disadvantages of the prior art.

### Summary of the invention

In accordance with a first aspect of the invention, a method for consolidating first and second versions of a large-scale dynamic Knowledge Organization System; KOS, is proposed. The KOS organizes data describing concepts and their relative attributes in a hierarchical data structure. First and second dates are associated with said first and second versions respectively. The method is remarkable in that it comprises the following steps:

a) using data processing means, identifying at least one amended concept in the second version of the KOS, as compared to the first version of said KOS;
b) using data processing means, identifying an evolutionary relationship between said amended concept in the second version of the KOS with respect to the first version of the KOS;
c) using data processing means, recording the amended concept from the second version of the KOS into the first version, recording data indicating said evolutionary relationship into the first version of the KOS, thereby generating a consolidated hierarchical data structure comprising the concepts of said KOS at both first and second dates, and storing said consolidated hierarchical data structure in a memory element.

The method further comprises computing a value indicating the similarity between any pair of concepts in the consolidated hierarchical data structure, EKG, said pair being linked by an evolutionary and/or hierarchical relationship, wherein said value is computed by said data processing means based on the semantic and/or lexical similarity of said concepts' title or attributes, and associating the resulting similarity value with said evolutionary and/or hierarchical relationship.

The processing means may preferably comprise a data processor, such as a central processing unit, CPU, of a computing device. The data processor may preferably be programmed by appropriately formulated software code to implement the method steps. The memory element may preferably comprise a Random-Access Memory, RAM, module, or a persistent storage device such as a Hard Disk Drive, HDD, or a Solid-State Drive, SSD. The processing means may be configured to have read and write access to said memory element, preferably via a data bus of a computing device that comprises both the processing means and the memory element. Alternatively, the memory element may be physically remote from the processing means, and accessible by the latter through a data communication network and using corresponding data communication interfaces.

Preferably, the first version of said KOS may be comprised in a previously consolidated hierarchical data structure comprising the concepts of said KOS at said first date and at an earlier date.

The method may preferably comprise associating a validity period attribute, having a starting date and an ending date, to each concept and to each hierarchical relationship between concepts.

Preferably, the evolutionary relationship may comprise a deletion or change of a concept in the second version as compared to the first version of said KOS, and the method may further comprise setting the validity ending date of the corresponding concept in the first version of the KOS, to indicate said first date.

Preferably, the evolutionary relationship may comprise an addition or change of a concept in the second version as compared to the first version of said KOS, and the method may further comprise setting the validity starting date of the corresponding concept from the second version of the KOS, to indicate said second date.

The method may preferably comprise the step of updating the hierarchical relationships between concepts in the consolidated hierarchical data structure following said change and consolidation.

Preferably, said step of updating the hierarchical relationships may comprise updating the validity period of at least one hierarchical relationship.

Updating the hierarchical relationships between concepts may preferably comprise identifying a hierarchical relationship that is affected by an addition, deletion or change of at least one concept in the second version of the KOS as compared to the first version of the KOS, said concept being involved in said hierarchical relationship.

Updating said hierarchical relationships in the consolidated hierarchical data structure may preferably comprise updating the validity period of the initial relationship corresponding to the first version KOS, to indicate an ending date corresponding to said first date. Updating said hierarchical relationships may preferably comprise setting the validity period of the corresponding evolved relationship from the second version of the KOS, to indicate a starting date corresponding to said second date.

The method may preferably further comprise the step of amending the validity period to extend to said second date, for each concept and hierarchical relationship that is not identified as being amended in the second version of the KOS, as compared to the first version of the KOS.

The evolutionary relationship may preferably comprise a change if at least one attribute of said concept in the second version has changed as compared to the first version of the KOS.

The method may preferably comprise the step of associating data describing a given concept's neighbourhood in said consolidated hierarchical data structure, wherein said neighbourhood comprises any concepts that are linked to said given concept by an evolutionary and/or hierarchical relationship, and having an associated similarity value that is higher than a predetermined threshold value.

The method may preferably comprise an additional step of, using said data processing means, searching for a query string in said consolidated hierarchical data structure, wherein the search path follows said hierarchical relationships between concepts, said evolutionary relationships between concepts, or a combination of the above.

In accordance with another aspect of the invention, a method of annotating data that is provided in a memory element is proposed. The method comprises, using data processing means, identification of at least one piece of data that corresponds to a concept in a Knowledge Organization System, KOS, to which the data processing means have access, and associating said identified piece of data with said concept, characterized in that said KOS is a consolidated KOS as computed by the method in accordance with a previous aspect of the invention.

In accordance with a further aspect of the invention, a computing system comprising data processing means and at least one memory element for storing first and second versions of a large scale a large-scale dynamic Knowledge Organization System, KOS, is proposed. Said KOS organizes data describing concepts and their relative attributes in a hierarchical data structure. First and second dates are associated with said first and second versions respectively. The computing device is remarkable in that said data processing means are configured for:

a) identifying at least one amended concept in the second version of the KOS, as compared to the first version of said KOS;
b) identifying an evolutionary relationship between said amended concept in the second version of the KOS with respect to the first version of the KOS;
c) recording the amended concept from the second version of the KOS into the first version, recording data indicating said evolutionary relationship into the first version of the KOS, thereby generating a consolidated hierarchical data structure comprising the concepts of said KOS at both first and second dates, and storing said consolidated hierarchical data structure in a memory element.

The data processing means are further configured for computing a value indicating the similarity between any pair of concepts in the consolidated hierarchical data structure (EKG), said pair (C01, C01') being linked by an evolutionary (E) and/or hierarchical relationship, the value being computed based on the semantic and/or lexical similarity of said concepts' title or attributes, and associating the resulting similarity value with said evolutionary and/or hierarchical relationship.

The data processing means may preferably be further configured for carrying out the method steps in accordance with any previous aspect of the invention.

In accordance with another aspect of the invention, a computer program is proposed. The computer program comprises computer readable code means, which when run on a computer, causes the computer to carry out the method according to any aspect of the invention

Finally, a computer program product is proposed, comprising a computer-readable medium on which the computer program according to aspects of the invention is stored.

Aspects of the present invention provide the possibility to generate a consolidated hierarchically structured data structure comprising the data comprised in a first and second version of a dynamic Knowledge Organization System, KOS. By iteratively recording concepts that do not change between versions of the KOS only once, the storage volume that is required for the consolidated data structure is reduced as compared to keeping multiple versions of the same KOS. By keeping a history of changes and evolutions within the consolidated data structure, including data that describes the nature of these evolutions and timing data indicating validity periods of relationships and/or concepts, the consolidated hierarchical data structure as provided by aspects of the invention provides a completed evolutionary knowledge graph that goes beyond individual versions of the same KOS. This allows for example software systems such as AI agents that rely on the resulting data structure to keep track of the evolution of concepts, which is beneficial for example when searching for a given concept that may have evolved/split/changes in time. As a result, the available data from different versions of the same KOS becomes better suited for exploitation by machine-based algorithms using it as an input for further applications.

## Brief description of the drawings

Several embodiments of the present invention are illustrated by way of figures, which do not limit the scope of the invention, wherein:

- figure 1 provides a flow diagram indicating the main method steps in accordance with a preferred embodiment of the invention;
- figure 2 illustrates two versions of the same KOS, and a consolidated hierarchical data structure as provided by a preferred embodiment of the invention;
- figure 3 illustrates a historical representation of a concept;
- figure 4 illustrates an evolutionary knowledge graph, EKG, as provided by embodiments of the inventions;
- figure 5 provides a flowchart providing creation steps toward an EKG, in accordance with a preferred embodiment of the invention;
- figure 6 provides an example of how a semantic annotation is adapted using an EKG as provided in accordance with a preferred embodiment of the invention.

This section describes features of the invention in further detail based on preferred embodiments and on the figures, without limiting the invention to the described embodiments. Unless otherwise stated, features described in the context of a specific embodiment may be combined with additional features of other described embodiments.

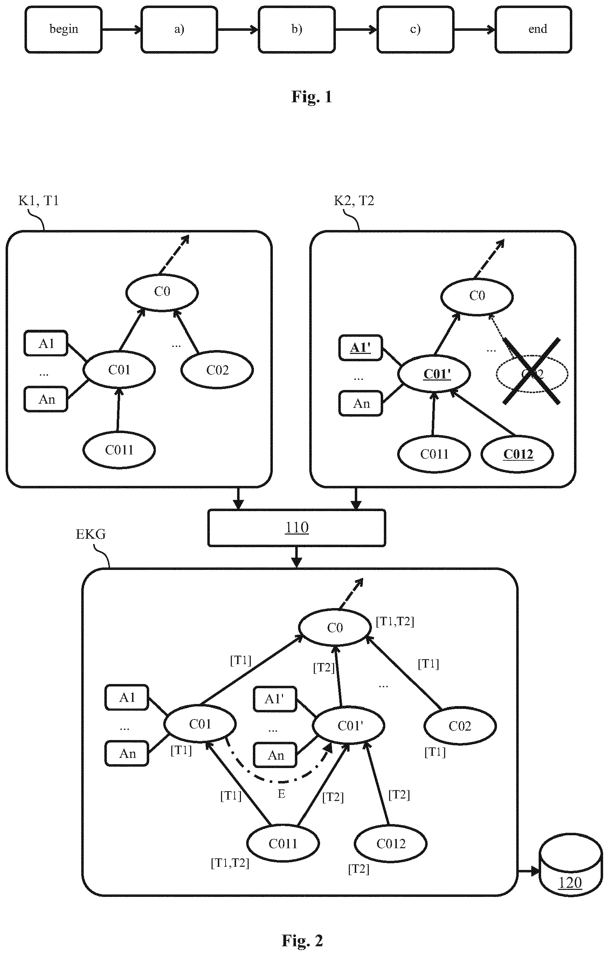

Figure 1 shows a workflow indicating steps a) through c) in accordance with a preferred embodiment of the invention. Figure 2 is an illustration based on which the different steps of the method will be described. Figure 2 shows a partial view of a first version K1 of a large-scale dynamic Knowledge Organization System, KOS. The KOS may for example be an ontology covering a given knowledge domain, and representing the knowledge at a first time or date T1. The KOS K1 organizes data that describes concepts, labelled as C0, C01, C02, C011, in a hierarchical data structure. In the example that is provided, C0 is a generic concept having more specific children C01 and C02. C01 is in turn more generic than concept C011. While all of the concepts are generally provided with a series of attributes, these attributes, labelled A1 to An, are shown for concept C01 only. A corresponding partial view of the same KOS at subsequent time or date T2 is also shown. The KOS has evolved from a first version K1 to a second version K2, which organizes data describing evolved concepts and their relative attributes in a hierarchical data structure. K1 and K2 are typically provided in a memory element to which a data processor 110 has read access. In a first step a), the data processor compares the two versions K1 and K2 of the KOS in order to identify at least one amended concept, which has evolved in the second version K2, as compared to the first version K1. Advantageously the set of all differences between K1 and K2 is computed. After step a), all changed concepts between the first and second versions K1, K2 of the KOS have been identified.

At step b) the data processing means proceed to generate data indicating how the KOS has been changed between times T1 and T2. This gives rise to an evolutionary relationship between the differing concepts between the two versions K1, K2 of the KOS. In the non-limiting example of figure 2, at time T2, the concept C0 1' is identified as having changed from its corresponding version C01 at time T1, as one of its attributes has evolved from a first value A1 to a second value A1'. Other criteria may be used to identify a changed concept, such as for example a change in a particular attribute, or a change of a minimum number of attributes, but in this example, a change in one of the concepts attributes signifies that the concept has changed. Further, concept C02 has been deleted from the KOS at time T2, while it was present as a child to concept C0 at time T1. Still further, a new concept C012 has been added to the KOS at time T2, as a sibling to concept C011. More complex evolutions may equally be identified, such as a split of an initial concept, a merge of two previously separate concepts, or a move of a concept to a different place in the hierarchy. It is referred to the following publications, which are hereby incorporated by reference in their entirety, for further details on the identification of the nature of concept changes:

- J.C. Dos Reis, Cédric Pruski, Marcos Da Silveira, Chantal Reynaud "Vers une approche automatique pour la maintenance des mappings entre ressources termino-ontologiques du domaine de la santé » Atelier IC pour l'interopérabilité Sémantique dans les applications de e-Santé, associé à IC'2012, Jun 2012, Paris, France, available from https://hal.inria.fr/hal-00787443 ;
- Hartung, M., GroB, A., Rahm, E., 2013. "Conto-diff- generation of complex evolution mappings for life science ontologies". Journal of Biomedical Informatics 46, 15-32, available from https://doi.org/10.1016/j.jbi.2012.04.009.

At the subsequent step c), all the data from the two versions K1, K2 of the KOS is consolidated in a consolidated hierarchical data structure, referred to as evolutionary knowledge graph, EKG, which is then recorded in a memory element 120 to which the data processing means have write access. The EKG is preferably stored in a graph database. The consolidation step comprises merging amended concepts from the version at time T2 with the concepts as provided at time T1. The consolidation step further comprises adding data indicating the evolutionary relationship (e.g. a deletion/addition/amendment of a previously available concept) between any amended concepts to the EKG. By way of example, the resulting EKG stemming from a consolidation of K1 and K2 is illustrated in figure 2. The dash-dotted line E between concepts C01 and C01' indicates that the former has evolved into the latter. It becomes apparent that the EKG only stores a total of six concepts, while the aggregation of K1 and K2 amounted to a total of eight concepts, which were using more storage space. While the most recent knowledge is captured by the EKG (e.g. concept C01'), the previously available knowledge (e.g. concept C01) remains available and usable in the resulting data structure, as concept C01' is linked through the evolutionary relationship E with its previous version.

In a preferred embodiment of the method, as shown also on figure 2, each concept and hierarchical relationship of the EKG is associated with data indicating a validity period of the corresponding concept and/or hierarchical relationship in the corresponding knowledge domain. This allows for recording precise timing information about any changes that are made to the KOS. The validity periods for stable, unamended concepts C0 and C011 are spanning the range [T1, T2], while the remaining relationships or concepts are either valid until time T1, or become valid at time T2 only. For example, concept C011 is hierarchically related to concept C01 until time T1. Concept C01 is only valid until time T1, at which it evolves into concept C01' as it has an amended attribute A1'. At time T2, concept C01' therefore replaces concept C01 in the hierarchical data structure. C0 11 is thus hierarchically related to concept C01' from time T2 onwards.

The consolidated hierarchical data structure finds many applications. For example, if a query is directed towards concept C01', a search algorithm may not only retrieve concept C01', but it may follow the evolutionary relationship and provide an answer indicating that prior to time T2, a similar concept C01 was already known. Using similar principles, data annotated using an ontology representing knowledge at time T1 may still be used at time T2, as the knowledge available at time T1 remains available in the consolidated data structure, rather than being replaced by updated knowledge.

As both K1 and K2 remain entirely included in the EKG, it becomes apparent that the EKG can be iteratively updated, as for example a further version K3 becomes available at a later time T3. Any differences between K3 and al concepts and relationships having a validity date extending to T2 will be considered in such a future iteration of steps a) to c).

In what follows, a particularly preferred embodiment of the invention is presented, without limiting the invention thereto.

*1. Formal representation and use of the evolutionary knowledge graph*

The inventors aim at representing the evolution of an ontology as time passes. Of particular interest are the concepts of an ontology and the relationships among them. The relationships that are considered in this embodiment are limited to hierarchical relationships and evolutionary relationships, linking concepts through time.

The evolutionary knowledge graph, EKG, is defined for the present embodiment by a set of vertices V and a set of edges: GCE=(V, E), wherein the set of vertices is given by:

$$V = \left\{ (C_{label}, P_V) \left| \begin{array}{l} C_{label} \subseteq O, \\ P_V = (D_V, F_V), D_V, F_V \in \mathbb{N}, 0 \leq D_V \leq F_V, \end{array} \right. \right\} (1)$$

and the set of edges is given by:

$$E = \left\{ (u, v, P_E, R, Sim_E) \left| \begin{array}{l} u, v \in V, \\ P_E = (D_E, F_E), D_E, F_E \in \mathbb{N}, 0 \leq D_E \leq F_E, \\ R \in \{sup, HghLevel, LowLevel, none\}, \\ Sim_E \in \mathbb{R}^+ \end{array} \right. \right\} (2)$$

A node of the graph comprises two pieces of information: the label $C_{label}$ of the concept it represents, and a validity period $P_V$ during which the concept has existed in the ontology O. An edge of the EKG in accordance with the present embodiment comprises five pieces of information: the nodes that it connects, *u* and *v*; the relationship R among the nodes (evolutionary or hierarchical); the validity period during which the relationship R is valid; and a similarity value $Sim_E$ that is computed for the relationship. If two concepts or two versions of a concept are the same, the similarity value associated to their relationship may be a maximum number, for example 1. If they are entirely different, for example based on their label and/or attributes, the similarity value associated to their relationship may be a minimum number, for example 0. Intermediate numbers between the minimum and maximum values may describe different levels of similarity. Such values may be computed by analysing, using data processing means, lexical and/or semantic differences between the labels of the concepts, and their attributes. Other ranges may be used for the similarity values without departing from the present invention.

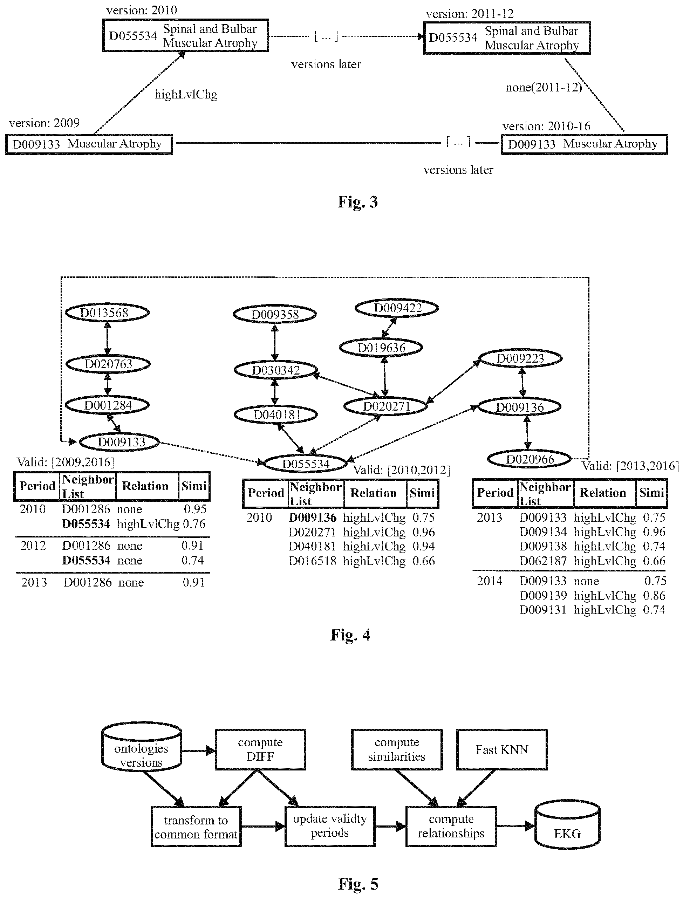

In order to determine evolutionary relationships, several assumptions are made. Combined with the results stemming from computing the DIFF set of two versions of an ontology, the analysis of the similarity value allows for estimating whether a concept is potentially the result of an evolution of a concept present in the previous version of the ontology. At each evolutionary iteration, the similarity values are recomputed. Therefore, the list of potential evolutions differs from one iteration to the next. All relationship data recorded in the EKG specify the nature of a relationship as well as its direction. So, if a concept is moved from one part of the ontology to another, it remains possible to find it by following the evolutionary relationship linking the two versions, see for example the link between D009133 and D020966 on figure 4.

Figure 3 illustrates the principle of the EKG for representing the evolution of the concept *"muscular atrophy"* from MeSH of 2009 to 2016. Concepts that have not changed in this period (for example D009133) are shown at the bottom whereas amended concepts are shown at the top (e.g., in 2010, *"spinal and bulbar muscular atrophy"* ID D05534). This latter concept, added in 2010, has a high similarity with version 2009 of the concept *"muscular atrophy"* (ID D009133). This is why the method adds a relationship indicating a probable evolution of concept D009133 towards D05534, and labelled as highLvlChg. In the considered formalism, three types of evolutionary relationships are considered: highLvlChg, lowLvlChg, and none. This set has been defined based on ontology changes that can be identified with tools known in the art (Hartung et al., 2013). The amendments delC (deletion of a concept), addC (addition of a concept), split (explosion of a concept), merge (fusion of concepts), move (displacement of a concept) and chgAttValue (change of an attribute value) are grouped in the highLvlChg category. The lowLvlChg groups delA (deletion of an attribute) and addA (addition of an attribute). To indicate that no change has been found, the group *"none"* is used. The use of the latter is limited to concepts that have already changed in the past, but that are steady since.

A more detailed view of the EKG in accordance with the present embodiment is provided in figure 4, wherein hierarchical relationships are shown as solid lines and evolutionary relationships are shown as dashed lines. In order to facilitate the comprehension of the graph, some neighbouring concepts and evolutions are not shown. As an example, consider concepts D009133, D055534 and D020966. These concepts belong to distinct hierarchies; however, they are present in different neighbourhood tables. For example, in 2010, there exists an evolutionary relationship highLvlChg between D009133 and D05534. In 2012, this relationship is *"none"'*, i.e., steady. in 2013, there is no relationship because the validity period of concept D055534 ends in 2012. However, in 2013, concept D020966 is created, which is an evolution of concept D009133. This approach for inferring the relationships within the EKG is interesting if ontology amendments are not well documented.

*2. Construction of the EKG*

Creating the EKG in accordance with the present embodiment requires a first version of the ontology or KOS as an input. The following steps then apply, with reference to figure 5:

- *transforming the format:* information required for constructing the EKG (eqs. 1 and 2) are extracted from an initial ontology: concepts, attributes, hierarchical relationships, or they are inferred, such as similarity values associated with existing relationships. Neighbourhood and evolutionary relationships are not computed for the first initial version of the KOS/EKG.
- *updating validity periods for stable concepts and relationships:* if a new version of the ontology/KOS is added, first the DIFF set between the latest two versions is computed.

This allows to identify the stable portion of the EKG. The concepts and relationships in the stable part will have their validity period incremented (updated). No similarity values are computed for the stable part, either.

- *updating amended concepts:* if a concept is amended, it is considered that a new version of the concept has appeared. The validity period of the previous version is no longer updated, and the new version is added to the graph.
- *updating relationships:* two types of amendments are considered as having a potential impact on existing relationships:

    (a) the new version of the concept maintains the same hierarchical relationships held by the old version. IN this case, an equivalent structural/hierarchical relationship is generated for the new concept, an initial value is set for the validity period of the new concept, and a similarity value between the new concept and its parent/super-concept is computed using the data processor. Then the nature of the amendment / evolutionary relationship is established. It may be of the LowLevel type if attributes are deleted or added, or of the HighLevel type if a split, merge, or attribute amendment is identified. Finally, a similarity value between the two versions of the concept is computed and associated with the evolutionary relationship.
    (b) All the neighbours of the new version of the concept have changed. This is the case for example if a concept has been moved or added. In such a case, the neighbourhood of the concept must be recomputed by the data processor.

- *computing the neighbourhood:* the neighbourhood of a concept is the list of concepts having the highest similarities with that concept and that are potentially involved in an evolutionary relationship with a new concept (or with a new version of a concept). The validity period of the neighbourhood relationship, an identifier of the concept, the nature of the evolution, and the similarity value are recorded for the concept's neighbourhood (see the table associated with the graph on figure 4). In order to compute the similarity between concepts, a hybrid method is preferably used, which takes into account lexical as well as semantic aspects of the concepts, as proposed by Cardoso et al. 2018b, which is hereby incorporated by reference in its entirety. In order to establish which concepts will be part of the neighbourhood, a fast k-NN graph process, as proposed by Debatty et al. (2016) is used:

    (a) k nearest neighbours of the concept, among the concepts of the EKG, are identified;
    (b) The tables identifying the neighbours are updated. The nature of the relationship is determined based on the amendments suffered by the concept. For example, if a concept has been added, the relationship will be of type highLvlChg. In the particular case, wherein an evolutionary relationship has existed in the past, but no further amendment has been identified during the past two iterations, the relationship type "none" is attributed. This limits the search time in the graph. An indication that an evolution has existed beforehand between two concepts allows to find a path between searched terms/concepts more rapidly.

*3. Use case of the evolutionary knowledge graph*

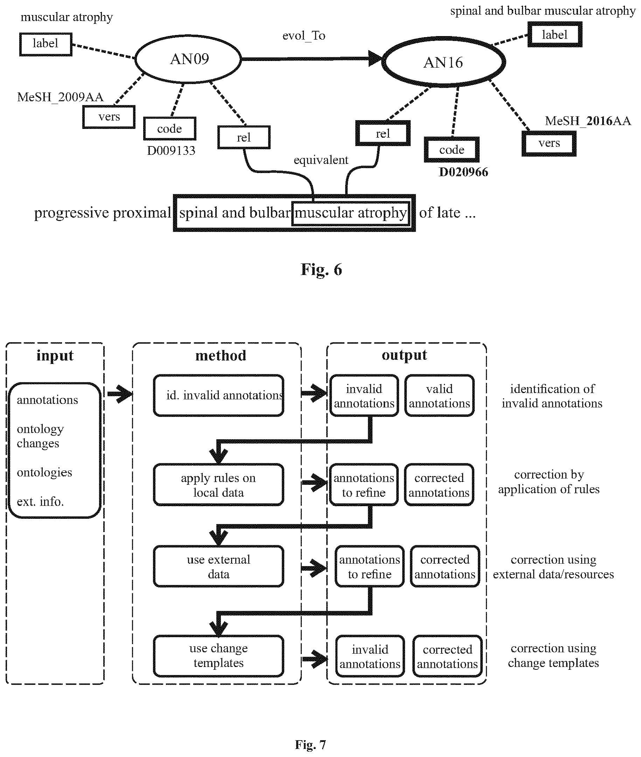

The proposed EKG finds use in multiple applications. The search for temporal information on the Web, as described in Pruski et al. 2011 is a typical example. Of interest is also the evolution of semantic annotations in the health domain (Cardoso et al., 2016). In this context, annotations consist in associating a concept of an ontology with digital information such as a text or an image, thereby rendering the semantic content of these annotated data usable by software agents. However, the dependency of annotations on ontologies gives rise to updating problems if the annotations are to follow the successive evolutions of the used ontology (Cardoso et al., 2017). In this framework, the EKG as proposed by aspects of the invention allows to find the history of a concept and to update the annotations that depend on it automatically. It is suggested to adapt the W3C annotation standard (http://www.w3.oeg/TR/annotation-model), extended with the "evol_To" relationship to represent evolutions of annotations (Cardoso et al., 2016). The EKG comprises all the information that is required to allow for precisely tracking the evolution of annotations. The example provided in figure 6 shows the evolutionary link "evol_To" that connects two version of the annotation AN09 and AN16. The rectangles show descriptive information of the annotation, such as the ontology's version, the associated concept code, the semantic relationship, etc... The descriptive information that is not affected by the evolutions of the ontology in AN09 is duplicated in AN16, whereas the other part is amended so as to remain in coherence with the 2016 version of the ontology. By way of example, the concept code has changed in version 2016, so the previous concept code is replaced by the new concept code associated with the annotation.

*3.1 Experimental validation of the EKG*

The goal of this section is to experimentally validate, based on an annotation corpus that has been validated by experts, that the EKG as proposed by aspects of the invention includes the correct concept evolutions that are associated with the annotation, so as to be able to detect invalid annotations and to make them evolve in a coherent way.
In the experimental setup, four EKGs have been generated for MeSH (https://www.ncbi.nlm.nih.gov/mesh), CM (https://www.cdc.gov/nchs/icd/icd9cm.htm), SNOMED CT(http://www.snomed.org), and NCIt (https://ncit.nci.nih.gov/ncitbrowser), which are four main terminological resources in the health sector. These EKGs represent the evolution of each ontology for the period spanning 2009-2016. The graphs have been built using the AA versions of these resources expressed in UMLS OWL format (https://www.nlm.nih.gov/research/umls). The COnto-Diff tool (Hartung et al., 2013) is used to identify amendments between two successive versions. As regards semantic annotations, a corpus of 500 annotated resources (https://git.list.lu/ELISA/AnnotationDataset) is used, annotated at two different instants in time. These resources have been extracted from the TREC Clinical Division Support campaign (2014) (http://www.trec-cds.org/2014.html) and they have been annotated using the GATAE (Cunningham, 2002) and NCBO tools (Whetzel et al., 2011). Among the generated annotations, 500 have been selected (approximately 125 per ontology) based on the sole selection criterion that the concept used for annotation the document has evolved in the considered period. The two versions of the 500 selected annotations have been manually validated by experts in this knowledge domain.
In previous work by the inventors, a direct rule based method has been proposed for maintaining semantic annotations (Cardoso et al., 2018a). This approach, as outlined in figure 7, implies external resources stemming from Bioportal (http://bioportal.biontologv.org) for taking decisions during the detection of invalid annotations and to choose the best target concept for migrating such an annotation. To do so, the ontologies and the semantic alignments offered by Bioportal are considered to identify synonyms of the evolved concept, and to generate an anchoring point for the new version of the annotation (Pruski et al. 2016). In what follows, we show that using the proposed EKG provide overall better results than the use of Bioportal, which is not always available, and in particular not for older versions.
The evaluation approach comprises (i) verifying whether the EKGs allow for better detection of invalidated annotations by evolving the ontologies with which they are associated and (ii) verifying whether the graphs provide useful information on the evolution of concepts of an ontology in order to maintain coherent annotation depending thereon. Therefore, it is verified whether there exists a path in the generated EKG linking a concept initially used to annotate a document with its possible evolution at the time of interest. In the example of figure 6, a path between concept D009133 (used in 2009) and its evolution in 2016 is sought. In this example, the concept D020966 (used in 2016) is returned.
The validation method uses as input the two annotation versions of the considered corpus, and the generated EKG for the respective ontology. In each case, the ID of the concept used in 2009 for annotating the resource is considered, its representation in the EKG is sought (this has to a node having validity period comprising 2009), and the graph is recursively traversed until 2016, while never going back along the temporal axis. Then, the validity period of each node and edge of the neighbourhood is analysed. If for example the path uses a node that is valid in 2011, then the minimal period is fixed to 2011 for the remainder of the path. The search terminates if a 2016 version of the concept is found or, in the case where there remain edges to be traversed, if those lead to a concept that is valid during a period that is posterior to the maximum period, or finally if the root of the graph is visited (which means that it is impossible to go further).

*3.2 Experimental results*

Table I shows the experimental results obtained for the detection of semantic annotations. As shown in Table I, the use of the EKG as proposed by aspects of the invention works globally better than using the Bioportal for detecting annotation that have been invalidated by the evolution of the corresponding concepts. The values for precision, recall and F-Score are very close (cf. precision for NCIt), or much better if the EKG is used (cf. F-Score for MeSH and ICD-9-CM). It is therefore concluded that the proposed EKG is useful, for example, for detecting invalid annotations.

TABLE I: Precision (P), Recall (R) and F-Score (F1) for the maintenance of semantic annotations using the direct method (BK) and using the EKG (KG) as proposed by aspects of the invention.

| | ICD-9-CM | | | | MeSH | | |
|---|---|---|---|---|---|---|---|
| Method | P | R | F1 | | P | R | F1 |
| BK | 1 | 0.129 | 0.229 | | 1 | 0.050 | 0.094 |
| KG | 1 | 0.500 | 0.661 | | 0.974 | 0.306 | 0.465 |

| | NCIt | | | | SNOMED CT | | |
|---|---|---|---|---|---|---|---|
| Method | P | R | F1 | | P | R | F1 |
| BK | 1 | 0.115 | 0.207 | | 1 | 0.625 | 0.769 |
| KG | 0.975 | 0.750 | 0.848 | | 0.917 | 0.668 | 0.786 |

References

AKIBA T., IWATA Y. & YOSHIDA Y. (2014). Dynamic and historical shortest-path distance queries on large evolving networks by pruned landmark labeling. In Proceedings of the 23rd International Conference on World Wide Web, WWW ' 14, p. 237-248 : ACM.

BAGAN G., BONIFATI A., CIUCANU R., FLETCHER G. H. L., LEMAY A. & ADVOKAAT N. (2017). gmark : Schema-driven generation of graphs and queries. IEEE Transactions on Knowledge and Data Engineering, 29(4), 856-869.

BIZER C. & CYGANIAK R. (2014). RDF 1.1 TriG. W3C recommendation, 110.

BIZER C., HEATH T. & BERNERS-LEE T. (2011). Linked data : The story so far. In Semantic services, interoperability and web applications : emerging concepts, p. 205-227. IGI Global.

BODENREIDER O. (2004). The unified medical language system (UMLS) : integrating biomedical terminology. Nucleic acids research, 32(suppl_1), D267-D270.

CARDOSO S., REYNAUD-DELAÎTRE C., DA SILVEIRA M., LIN Y.-C., GROSS A., RAHM E. & PRUSKI C. (2018a). Evolving semantic annotations through multiple versions of controlled medical terminologies. Health and Technology, 8(5), 361-376.

CARDOSO S. D., DA SILVEIRA M., LIN Y.-C., CHRISTEN V., RAHM E., REYNAUD-DELAÎTRE C. & PRUSKI C. (2018b). Combining semantic and lexical measures to evaluate medical terms similarity. In M.-E. VIDAL & S. AUER, Eds., Data Integration in the Life Sciences, Lecture Notes in Computer Science (pp. 17-32). Springer International Publishing.

CARDOSO S. D., PRUSKI C., DA SILVEIRA M., LIN Y.-C., GROSS A., RAHM E. & REYNAUD- DELAÎTRE C. (2016). Leveraging the impact of ontology evolution on semantic annotations. In European Knowledge Acquisition Workshop, p. 68-82 : Springer.

CARDOSO S. D., REYNAUD-DELAÎTRE C., DA SILVEIRA M. & PRUSKI C. (2017). Combining rules, background knowledge and change patterns to maintain semantic annotations. In AMIA Annual Symposium Proceedings, volume 2017, p. 505 : American Medical Informatics Association.

CARO D., RODRÍGUEZ M. A. & BRISABOA N. R. (2015). Data structures for temporal graphs based on compact sequence representations. Inf Syst., 51(C), 1-26.

CUNNINGHAM H. (2002). Gate, a general architecture for text engineering. Computers and the Humanities, 36(2), 223-254.

DA SILVEIRA M., DOS REIS J. & PRUSKI C. (2015). Management of dynamic biomedical termino- logies : current status and future challenges. Yearbook of Medical informatics, 24(01), 125-133.

DEBATTY T., MICHIARDI P. & MEES W. (2016). Fast online k-nn graph building. CoRR, abs/1602.06819.

GUHA R. V., BRICKLEY D. & MACBETH S. (2016). Schema.org : Evolution of structured data on the web. Commun. ACM, 59(2), 44-51.

HARTUNG M., GROSS A. & RAHM E. (2013). Conto-diff: generation of complex evolution mappings for life science ontologies. Journal of biomedical informatics, 46(1), 15-32.

JONQUET C., TOULET A., ARNAUD E., AUBIN S., YEUMO E. D., EMONET V., GRAYBEAL J., LAPORTE M.-A., MUSEN M. A., PESCE V. et al. (2018). AgroPortal : A vocabulary and ontology repository for agronomy. Computers and Electronics in Agriculture, 144, 126-143.

KIRSTEN T., HARTUNG M., GROSS A. & RAHM E. (2009). Efficient management of biomedical ontology versions. In R. MEERSMAN, P. HERRERO & T. DILLON, Eds., On the Move to Mea- ningful Internet Systems : OTM 2009 Workshops, p. 574-583, Berlin, Heidelberg : Springer Berlin Heidelberg.

KOSMATOPOULOS A., GIANNAKOPOULOU K., PAPADOPOULOS A. N. & TSICHLAS K. (2016). An overview of methods for handling evolving graph sequences. In Revised Selected Papers of the First International Workshop on Algorithmic Aspects of Cloud Computing - Volume 9511, ALGO- CLOUD 2015, p. 181-192, Berlin, Heidelberg : Springer-Verlag.

LABOUSEUR A. G., BIRNBAUM J., OLSEN, JR. P. W., SPILLANE S. R., VIJAYAN J., HWANG J.- H. & HAN W.-S. (2015). The G* graph database : Efficiently managing large distributed dynamic graphs. Distrib. Parallel Databases, 33(4), 479-514.

LU Z. (2011). Pubmed and beyond : a survey of web tools for searching biomedical literature. Data- base : The Journal of Biological Databases and Curation, 2011.

MOFFITT V. Z. & STOYANOVICH J. (2017). Towards sequenced semantics for evolving graphs. In Proc. of the 20th International Conference on Extending Database Technology (EDBT).

NOY N. F., SHAH N. H., WHETZEL P. L., DAI B., DORF M., GRIFFITH N., JONQUET C., RUBIN D. L., STOREY M.-A., CHUTE C. G. et al. (2009). BioPortal : ontologies and integrated data resources at the click of a mouse. Nucleic acids research, 37(suppl_2), W170-W173.

PRUSKI C., DOS REIS J. C. & DA SILVEIRA M. (2016). Capturing the relationship between evolving biomedical concepts via background knowledge. In Proceedings of the 9th International Confe- rence Semantic Web Applications and Tools for Life Sciences, Amsterdam, The Netherlands, De- cember 5-8, 2016.

PRUSKI C., GUELFI N. & REYNAUD C. (2011). Adaptive ontology-based web information retrieval : The target framework. International Journal of Web Portals (IJWP), 3(3), 41-58.

SEMERTZIDIS K. & PITOURA E. (2018). Top-k durable graph pattern queries on temporal graphs. IEEE Transactions on Knowledge and Data Engineering, p. 1-1.

SINGHAL A. (2012). Introducing the knowledge graph : Things, not strings. https://googleblog.blogspot.co.at/2012/05/ introducing-knowledge-graph-things-not.html. Accessed : Sept, 2018.

SMITH B., ASHBURNER M., ROSSE C., BARD J., BUG W., CEUSTERS W., GOLDBERG L. J., EIL- BECK K., IRELAND A., MUNGALL C. J. et al. (2007). The OBO foundry : coordinated evolution of ontologies to support biomedical data integration. Nature biotechnology, 25(11), 1251.

WHETZEL P. L., NOY N. F., SHAH N. H., ALEXANDER P. R., NYULAS C., TUDORACHE T. & MUSEN M. A. (2011). Bioportal : enhanced functionality via new web services from the national center for biomedical ontology to access and use ontologies in software applications. Nucleic acids research, 39(suppl 2), W541-W545.

The methods outlined here above are preferably implemented using processing means such as a data processor, which is appropriately programmed, or by specific electronic circuitry, as it is known in the art. The skilled person is capable of providing such programming code means or circuitry providing the required functionality based on the description that has been given, based on the drawings and without undue further burden.

It should be understood that the detailed description of specific preferred embodiments is given by way of illustration only, since various changes and modifications within the scope of the invention will be apparent to the skilled person. The scope of protection is defined by the following set of claims.

**Claims**

1. Method for consolidating first (K1) and second (K2) versions of a large scale dynamic Knowledge Organization System; KOS, wherein said KOS organizes data describing concepts and their relative attributes in a hierarchical data structure, and wherein first (T1) and second (T2) dates are associated with said first (K1) and second (K2) versions respectively, wherein the method comprises:

   a) using data processing means (110), identifying at least one amended concept (C01'), in the second version of the KOS, as compared to the first version of said KOS;
   b) using data processing means, identifying an evolutionary relationship (E) between said amended concept (C01') in the second version of the KOS (K2) with respect to the first version of the KOS (K1);
   c) using data processing means, recording the amended concept (C01') from the second version of the KOS into the first version, recording data indicating said evolutionary relationship (E) into the first version of the KOS, thereby generating a consolidated hierarchical data structure (EKG) comprising the concepts (C01, C01') of said KOS at both first (T1) and second dates (T2), and storing said consolidated hierarchical data structure in a memory element (120),

   and wherein the method further comprises computing a value indicating the similarity between any pair of concepts in the consolidated hierarchical data structure (EKG), said pair (C01, C01') being linked by an evolutionary (E) and/or hierarchical relationship, wherein said value is computed by said data processing means based on the semantic and/or lexical similarity of said concepts' title or attributes, and associating the resulting similarity value with said evolutionary and/or hierarchical relationship.

2. The method according to claim 1, wherein said first version of said KOS is comprised in a previously consolidated hierarchical data structure comprising the concepts of said KOS at said first date and at an earlier date.

3. The method according to any of claims 1 or 2, wherein the method comprises associating a validity period attribute, having a starting date and an ending date, to each concept and to each hierarchical relationship between concepts.

4. The method according to claim 3, wherein the evolutionary relationship comprises a deletion or change of a concept (C01', C02) in the second version as compared to the first version of said KOS, and wherein the method further comprises setting the validity ending date of the corresponding concept (C01, C02) in the first version of the KOS, to indicate said first date (T1).

5. The method according to any of claims 3 or 4, wherein the evolutionary relationship comprises an addition or change of a concept (C01', C012) in the second version as compared to the first version of said KOS, and wherein the method further comprises setting the validity starting date of the corresponding concept (C01', C012) from the second version of the KOS, to indicate said second date (T2).

6. The method according to any of claims 1 to 5, comprising the step of updating the hierarchical relationships between concepts in the consolidated hierarchical data structure following said change and consolidation.

7. The method according to claims 3 and 6, wherein said step of updating the hierarchical relationships comprises updating the validity period of at least one hierarchical relationship.

8. The method according to any of claims 3 to 7, wherein the method further comprises the step of amending the validity period to extend to said second date (T2), for each concept (C0, C011) and hierarchical relationship that is not identified as being amended in the second version of the KOS, as compared to the first version of the KOS.

9. The method according to any of claims 1 to 8, wherein the evolutionary relationship comprises a change if at least one attribute of said concept in the second version has changed as compared to the first version of the KOS.

10. The method according to any of claims 1 to 9, further comprising the step of associating data describing a given concept's neighbourhood in said consolidated hierarchical data structure (EKG), wherein said neighbourhood comprises any concepts that are linked to said given concept by an evolutionary and/or hierarchical relationship, and having an associated similarity value that is higher than a predetermined threshold value.

11. The method according to any of claims 1 to 10, comprising an additional step of, using said data processing means, searching for a query string in said consolidated hierarchical data structure, wherein the search path follows said hierarchical relationships between concepts, said evolutionary relationships between concepts, or a combination of the above.

12. A method of annotating data that is provided in a memory element using data processing means, the method comprising identification of at least one piece of data that corresponds to a concept in a Knowledge Organization System, KOS, to which the data processing means have access, and associating said identified piece of data with said concept, **characterized in that** said KOS is a consolidated KOS as computed by the method in accordance with any of claims 1 to 11.

13. A computing system comprising data processing means and at least one memory element for storing first and second versions of a large scale a large scale dynamic Knowledge Organization System, KOS, wherein said KOS organizes data describing concepts and their relative attributes in a hierarchical data structure, and wherein first and second dates are associated with said first and second versions respectively, wherein said data processing means are configured for:

a) identifying at least one amended concept in the second version of the KOS, as compared to the first version of said KOS;
b) identifying an evolutionary relationship between said amended concept in the second version of the KOS with respect to the first version of the KOS;
c) recording the amended concept from the second version of the KOS into the first version, recording data indicating said evolutionary relationship into the first version of the KOS, thereby generating a consolidated hierarchical data structure comprising the concepts of said KOS at both first and second dates, and storing said consolidated hierarchical data structure in a memory element,

and wherein the data processing means are further configured for computing a value indicating the similarity between any pair of concepts in the consolidated hierarchical data structure (EKG), said pair (C01, C01') being linked by an evolutionary (E) and/or hierarchical relationship, the value being computed based on the semantic and/or lexical similarity of said concepts' title or attributes, and associating the resulting similarity value with said evolutionary and/or hierarchical relationship.

14. A computer program comprising computer readable code means, which when run on a computer, causes the computer to carry out the method according to any of claims 1 to 12.

15. A computer program product comprising a computer-readable medium on which the computer program according to claim 14 is stored.

**Patentansprüche**

1. Methode zur Konsolidierung der ersten (K1) und zweiten (K2) Version eines groß angelegten dynamischen Wissensorganisationssystems, KOS, wobei das KOS Daten, die Konzepte und ihre relativen Attribute beschreiben, in einer hierarchischen Datenstruktur organisiert, und wobei ein erstes Datum (T1) und ein zweites Datum (T2) Daten mit der ersten (K1) bzw. zweiten (K2) Version verknüpft sind, wobei das Verfahren umfaßt:

a) unter Verwendung von Datenverarbeitungsmitteln (110), Identifizieren mindestens eines geänderten Konzepts (C01') in der zweiten Version der KOS im Vergleich zur ersten Version der KOS;

b) unter Verwendung von Datenverarbeitungsmitteln, Identifizieren einer evolutionären Beziehung (E) zwischen dem geänderten Konzept (C01') in der zweiten Version des KOS (K2) in Bezug auf die erste Version des KOS (K1);

c) unter Verwendung von Datenverarbeitungsmitteln, Aufzeichnen des geänderten Konzepts (C01') aus der zweiten Version des KOS in der ersten Version, Aufzeichnen von Daten, die die evolutionäre Beziehung (E) angeben, in der ersten Version des KOS, wodurch eine konsolidierte hierarchische Datenstruktur (EKG) erzeugt wird, die die Konzepte (C01, C01') des KOS sowohl zum ersten (T1) als auch zum zweiten Datum (T2) umfasst und, Speichern der konsolidiertes hierarchische Datenstruktur in einem Speicherelement (120),

und wobei das Verfahren weiterhin das Berechnen eines Werts umfasst, der die Ähnlichkeit zwischen einem beliebigen Paar von Konzepten in der konsolidierten hierarchischen Datenstruktur (EKG) angibt, wobei das Paar (C01, C01') durch eine evolutionäre (E) und/oder hierarchische Beziehung verbunden ist, wobei der genannte Wert von der genannten Datenverarbeitungseinrichtung auf der Grundlage der semantischen und/oder lexikalischen Ähnlichkeit des Titels oder der Attribute der genannten Konzepte berechnet wird und wobei der resultierende Ähnlichkeitswert der genannten evolutionären und/oder hierarchischen Beziehung zugeordnet wird.

2. Verfahren nach Anspruch 1, wobei die erste Version des KOS in einer zuvor konsolidierten hierarchischen Datenstruktur enthalten ist, die die Konzepte des KOS zum ersten Datum und zu einem früheren Datum umfasst.

3. Verfahren nach einem der Ansprüche 1 oder 2, wobei das Verfahren das Zuordnen eines Gültigkeitszeitraumattributs mit einem Startdatum und einem Enddatum zu jedem Konzept und jeder hierarchischen Beziehung zwischen Konzepten umfasst.

4. Verfahren nach Anspruch 3, wobei die evolutionäre Beziehung eine Löschung oder Änderung eines Konzepts (C01', C02) in der zweiten Version im Vergleich zur ersten Version des KOS umfasst, und wobei das Verfahren weiterhin das Festlegen des Gültigkeitsenddatums des entsprechenden Konzepts (C01, C02) in der ersten Version des KOS umfasst, um das erste Datum (T1) anzuzeigen.

5. Verfahren nach einem der Ansprüche 3 oder 4, wobei die evolutionäre Beziehung eine Hinzufügung oder Änderung eines Konzepts (C01', C012) in der zweiten Version im Vergleich zur ersten Version des KOS umfasst, und wobei das Verfahren weiterhin das Festlegen des Gültigkeitsbeginndatums des entsprechenden Konzepts (C01', C012) aus der zweiten Version des KOS umfasst, um das zweite Datum (T2) anzuzeigen.

6. Verfahren nach einem der Ansprüche 1 bis 5, umfassend den Schritt des Aktualisierens der hierarchischen Beziehungen zwischen Konzepten in der konsolidierten hierarchischen Datenstruktur nach der Änderung und Konsolidierung.

7. Verfahren nach den Ansprüchen 3 und 6, wobei der Schritt des Aktualisierens der hierarchischen Beziehungen das Aktualisieren des Gültigkeitszeitraums mindestens einer hierarchischen Beziehung umfasst.

8. Verfahren nach einem der Ansprüche 3 bis 7, wobei das Verfahren außerdem den Schritt des Änderns des Gültigkeitszeitraums umfasst, um ihn bis zum zweiten Datum (T2) für jedes Konzept (C0, C011) und jede hierarchische Beziehung zu verlängern, die nicht als geändert in der zweiten Fassung der KOS im Vergleich zur ersten Fassung der KOS identifiziert wird.

9. Verfahren nach einem der Ansprüche 1 bis 8, wobei die evolutionäre Beziehung eine Änderung umfasst, wenn sich mindestens ein Attribut des Konzepts in der zweiten Version im Vergleich zur ersten Version des KOS geändert hat.

10. Verfahren nach einem der Ansprüche 1 bis 9, das außerdem den Schritt des Zuordnens von Daten umfasst, die die Nachbarschaft eines bestimmten Konzepts in der konsolidierten hierarchischen Datenstruktur (EKG) beschreiben, wobei die Nachbarschaft alle Konzepte umfasst, die mit dem gegebenen Konzept durch evolutionäre und/oder hierarchische Beziehung verknüpft sind und die eine zugehörigen Ähnlichkeitswert haben, der höher als ein vorgegebener Schwellenwert ist.

**11.** Verfahren nach einem der Ansprüche 1 bis 10, umfassend einen zusätzlichen Schritt: Suchen nach einer Abfragezeichenfolge in der konsolidierten hierarchischen Datenstruktur unter Verwendung der Datenverarbeitungseinrichtung, wobei der Suchpfad den hierarchischen Beziehungen zwischen Konzepten, den evolutionären Beziehungen zwischen Konzepten oder einer Kombination der oben genannten folgt.

**12.** Ein Verfahren zum Kommentieren von Daten, die in einem Speicherelement bereitgestellt werden, unter Verwendung von Datenverarbeitungsmitteln, wobei das Verfahren die Identifizierung mindestens eines Datenelements umfasst, das einem Konzept in einem Wissensorganisationssystem (KOS) entspricht, zu dem die Datenverarbeitungsmittel Zugriff haben, und Zuordnen des identifizierten Datenelements zu dem Konzept, **dadurch gekennzeichnet, dass** die KOS eine konsolidierter KOS ist, wie durch das Verfahren gemäß einem der Ansprüche 1 bis 11 berechnet.

**13.** Ein Computersystem, das Datenverarbeitungsmittel und mindestens ein Speicherelement zum Speichern erster und zweiter Versionen eines groß angelegten dynamischen Wissensorganisationssystems (KOS) umfasst, wobei das KOS Daten, die Konzepte und ihre relativen Attribute beschreiben, in einer hierarchischen Datenstruktur organisiert, und wobei erstes Datum und ein zweites Datum mit der ersten bzw. zweiten Version verknüpft sind, wobei die Datenverarbeitungsmittel konfiguriert sind für:

a) Identifizieren mindestens eines geänderten Konzepts in der zweiten Version der KOS im Vergleich zur ersten Version der KOS;
b) Identifizieren einer evolutionären Beziehung zwischen dem geänderten Konzept in der zweiten Version des KOS und der ersten Version des KOS;
c) Aufzeichnen des geänderten Konzepts aus der zweiten Version des KOS in der ersten Version, Aufzeichnen von Daten, die die evolutionäre Beziehung anzeigen, in der ersten Version des KOS, wodurch eine konsolidierte hierarchische Datenstruktur erzeugt wird, die die Konzepte des KOS sowohl am ersten als auch am zweiten Datum umfasst und Speichern der konsolidierten hierarchischen Datenstruktur in einem Speicherelement,

und wobei die Datenverarbeitungsmittel weiterhin zum Berechnen eines Werts konfiguriert sind, der die Ähnlichkeit zwischen einem beliebigen Paar von Konzepten in der konsolidierten hierarchischen Datenstruktur (EKG) angibt, wobei das Paar (C01, C01') durch ein evolutionäres (E) und/oder hierarchische Beziehung verknüpft ist, wobei der Wert basierend auf der semantischen und/oder lexikalischen Ähnlichkeit des Titels oder der Attribute der Konzepte berechnet wird und der resultierende Ähnlichkeitswert mit der evolutionären und/oder hierarchischen Beziehung verknüpft wird.

**14.** Ein Computerprogramm, das computerlesbare Codemittel umfasst, die, wenn sie auf einem Computer ausgeführt werden, den Computer veranlassen, das Verfahren nach einem der Ansprüche 1 bis 12 auszuführen.

**15.** Computerprogrammprodukt, umfassend ein computerlesbares Medium, auf dem das Computerprogramm nach Anspruch 14 gespeichert ist.

**Revendications**

**1.** Procédé de consolidation des première (K1) et deuxième (K2) versions d'un système dynamique d'organisation des connaissances à grande échelle, KOS, dans lequel ledit KOS organise des données décrivant des concepts et leurs attributs relatifs dans une structure de données hiérarchique, et dans lequel des première (T1) et seconde (T2) dates sont respectivement associées auxdites première (K1) et seconde (K2) versions, dans lequel le procédé comprend :

a) à l'aide de moyens de traitement de données (110), identifier au moins un concept modifié (C01'), dans la seconde version du KOS, par rapport à la première version dudit KOS ;
b) à l'aide de moyens de traitement de données, identifier une relation évolutive (E) entre ledit concept modifié (C01') dans la seconde version du KOS (K2) par rapport à la première version du KOS (K1) ;
c) à l'aide de moyens de traitement de données, enregistrer le concept modifié (C01') de la seconde version du KOS dans la première version, enregistrer des données indiquant ladite relation évolutive (E) dans la première version du KOS, générant ainsi une structure de données hiérarchiques consolidées (EKG) comprenant les concepts (C01, C01') dudit KOS à la fois aux première (T1) et deuxième dates (T2), et mémorisant ladite structure de données hiérarchique consolidée dans un élément de mémoire (120),

et dans lequel le procédé comprend en outre le calcul d'une valeur indiquant la similarité entre n'importe quelle paire de concepts dans la structure de données hiérarchique consolidée (EKG), ladite paire (C01, C01') étant liée par une relation évolutive (E) et/ou hiérarchique, dans lequel ladite valeur est calculée par lesdits moyens de traitement de données sur la base de la similarité sémantique et/ou lexicale du titre ou des attributs desdits concepts, et associant la valeur de similarité résultante à ladite relation évolutive et/ou hiérarchique.

2. Procédé selon la revendication 1, **caractérisé en ce que** ladite première version dudit KOS est comprise dans une structure de données hiérarchique préalablement consolidée comprenant les concepts dudit KOS à ladite première date et à une date antérieure.

3. Procédé selon l'une quelconque des revendications 1 ou 2, **caractérisé en ce qu'**il consiste à associer un attribut de période de validité, ayant une date de début et une date de fin, à chaque concept et à chaque relation hiérarchique entre concepts.

4. Procédé selon la revendication 3, dans lequel la relation évolutive comprend une suppression ou un changement d'un concept (C01', C02) dans la deuxième version par rapport à la première version dudit KOS, et dans lequel le procédé comprend en outre la définition de la validité date de fin du concept correspondant (C01, C02) dans la première version du KOS, pour indiquer ladite première date (T1).

5. Procédé selon l'une quelconque des revendications 3 ou 4, dans lequel la relation évolutive comprend un ajout ou un changement d'un concept (C01', C012) dans la deuxième version par rapport à la première version dudit KOS, et dans lequel le procédé en outre comprend le réglage de la date de début de validité du concept correspondant (C01', C012) de la deuxième version du KOS, pour indiquer ladite deuxième date (T2).

6. Procédé selon l'une quelconque des revendications 1 à 5, comprenant l'étape de mise à jour des relations hiérarchiques entre concepts dans la structure de données hiérarchique consolidée suite à ladite modification et consolidation.

7. Procédé selon les revendications 3 et 6, dans lequel ladite étape de mise à jour des relations hiérarchiques comprend la mise à jour de la période de validité d'au moins une relation hiérarchique.

8. Procédé selon l'une quelconque des revendications 3 à 7, dans lequel le procédé comprend en outre l'étape consistant à modifier la période de validité pour s'étendre jusqu'à ladite deuxième date (T2), pour chaque concept (C0, C011) et pour chaque relation hiérarchique qui n'est pas identifié comme étant modifiée dans la deuxième version du KOS, par rapport à la première version du KOS.

9. Procédé selon l'une quelconque des revendications 1 à 8, dans lequel la relation évolutive comprend un changement si au moins un attribut dudit concept dans la seconde version a changé par rapport à la première version du KOS.

10. Procédé selon l'une quelconque des revendications 1 à 9, comprenant en outre l'étape consistant à associer des données décrivant le voisinage d'un concept donné dans ladite structure de données hiérarchique consolidée (EKG), dans lequel ledit voisinage comprend tous les concepts qui sont liés audit concept donné par un relation évolutive et/ou hiérarchique, et ayant une valeur de similarité associée supérieure à une valeur seuil prédéterminée.

11. Procédé selon l'une quelconque des revendications 1 à 10, comprenant une étape supplémentaire de, en utilisant lesdits moyens de traitement de données, rechercher une chaîne de charactères recherchée dans ladite structure de données hiérarchique consolidée, dans lequel le chemin de recherche suit lesdites relations hiérarchiques entre concepts, lesdites relations évolutives entre concepts, ou une combinaison de ce qui précède.

12. Procédé d'annotation de données fournies dans un élément de mémoire à l'aide de moyens de traitement de données, le procédé comprenant l'identification d'au moins une donnée correspondant à un concept dans un système d'organisation des connaissances, KOS, auquel les moyens de traitement de données ont accéder, et associer ladite donnée identifiée audit concept, **caractérisé en ce que** ledit KOS est un KOS consolidé tel que calculé par le procédé selon l'une quelconque des revendications 1 à 11.

13. Un système informatique comprenant des moyens de traitement de données et au moins un élément de mémoire pour stocker des première et deuxième versions d'un système d'organisation de connaissances dynamique à grande échelle, KOS, dans lequel ledit KOS organise des données décrivant des concepts et leurs attributs relatifs dans structure de données hiérarchique, et dans lequel des première et seconde dates sont respectivement associées auxdites première et seconde versions, dans lequel lesdits moyens de traitement de données sont configurés pour :

a) identifier au moins un concept modifié dans la deuxième version du KOS, par rapport à la première version dudit KOS ;
b) identifier une relation évolutive entre ledit concept modifié dans la deuxième version du KOS par rapport à la première version du KOS ;
c) enregistrer le concept modifié de la deuxième version du KOS dans la première version, enregistrer des données indiquant ladite relation évolutive dans la première version du KOS, générant ainsi une structure de données hiérarchique consolidée comprenant les concepts dudit KOS à la fois au premier et au deuxième dates, et stocker ladite structure de données hiérarchique consolidée dans un élément de mémoire,

et dans lequel les moyens de traitement de données sont en outre configurés pour calculer une valeur indiquant la similarité entre toute paire de concepts dans la structure de données hiérarchique consolidée (EKG), ladite paire (C01, C01') étant liée par une évolution (E) et/ou relation hiérarchique, la valeur étant calculée sur la base de la similarité sémantique et/ou lexicale du titre ou des attributs desdits concepts, et associant la valeur de similarité résultante à ladite relation évolutive et/ou hiérarchique.

14. Programme informatique comprenant des moyens de code lisibles par ordinateur, qui, lorsqu'ils sont exécutés sur un ordinateur, amènent l'ordinateur à exécuter le procédé selon l'une quelconque des revendications 1 à 12.

15. Produit programme d'ordinateur comprenant un support lisible par ordinateur sur lequel est stocké le programme d'ordinateur selon la revendication 14.

**Fig. 1**

**Fig. 2**

version: 2010

D055534  Spinal and Bulbar Muscular Atrophy

[ ... ]

versions later

version: 2011-12

D055534  Spinal and Bulbar Muscular Atrophy

highLvlChg

none(2011-12)

version: 2009

D009133  Muscular Atrophy

[ ... ]

versions later

version: 2010-16

D009133  Muscular Atrophy

**Fig. 3**

D013568

D009358

D009422

D019636

D020763

D030342

D009223

D001284

D040181

D020271

D009136

D009133

D055534

D020966

Valid: [2009,2016]

| Period | Neighbor List | Relation | Simi |
|---|---|---|---|
| 2010 | D001286 | none | 0.95 |
|  | **D055534** | highLvlChg | 0.76 |
| 2012 | D001286 | none | 0.91 |
|  | **D055534** | none | 0.74 |
| 2013 | D001286 | none | 0.91 |

Valid: [2010,2012]

| Period | Neighbor List | Relation | Simi |
|---|---|---|---|
| 2010 | **D009136** | highLvlChg | 0.75 |
|  | D020271 | highLvlChg | 0.96 |
|  | D040181 | highLvlChg | 0.94 |
|  | D016518 | highLvlChg | 0.66 |

Valid: [2013,2016]

| Period | Neighbor List | Relation | Simi |
|---|---|---|---|
| 2013 | D009133 | highLvlChg | 0.75 |
|  | D009134 | highLvlChg | 0.96 |
|  | D009138 | highLvlChg | 0.74 |
|  | D062187 | highLvlChg | 0.66 |
| 2014 | D009133 | none | 0.75 |
|  | D009139 | highLvlChg | 0.86 |
|  | D009131 | highLvlChg | 0.74 |

**Fig. 4**

ontologies versions → compute DIFF

compute similarities

Fast KNN

transform to common format → update validty periods → compute relationships → EKG

**Fig. 5**

muscular atrophy

spinal and bulbar muscular atrophy

**Fig. 6**

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.C. DOS REIS ; CÉDRIC PRUSKI ; MARCOS DA SILVEIRA ; CHANTAL REYNAUD.** Vers une approche automatique pour la maintenance des mappings entre ressources termino-ontologiques du domaine de la santé. *Atelier IC pour l'interopérabilité Sémantique dans les applications de e-Santé,* June 2012, https://hal.inria.fr/hal-00787443
- **HARTUNG, M. ; GROB, A. ; RAHM, E.** Conto-diff-generation of complex evolution mappings for life science ontologies. *Journal of Biomedical Informatics,* 2013, vol. 46, 15-32, https://doi.org/10.1016/j.jbi.2012.04.009
- Dynamic and historical shortest-path distance queries on large evolving networks by pruned landmark labeling. **AKIBA T. ; IWATA Y. ; YOSHIDA Y.** Proceedings of the 23rd International Conference on World Wide Web, WWW. ACM, 2014, vol. 14, 237-248
- **BAGAN G. ; BONIFATI A. ; CIUCANU R. ; FLETCHER G. H. L. ; LEMAY A. ; ADVOKAAT N.** gmark : Schema-driven generation of graphs and queries. *IEEE Transactions on Knowledge and Data Engineering,* 2017, vol. 29 (4), 856-869
- **BIZER C. ; CYGANIAK R.** RDF 1.1 TriG. *W3C recommendation,* 2014, vol. 110
- Linked data : The story so far. **BIZER C. ; HEATH T. ; BERNERS-LEE T.** Semantic services, interoperability and web applications : emerging concepts. IGI Global, 2011, 205-227
- **BODENREIDER O.** The unified medical language system (UMLS) : integrating biomedical terminology. *Nucleic acids research,* 2004, vol. 32 (1), D267-D270
- **CARDOSO S. ; REYNAUD-DELAÎTRE C. ; DA SILVEIRA M. ; LIN Y.-C. ; GROSS A. ; RAHM E. ; PRUSKI C.** Evolving semantic annotations through multiple versions of controlled medical terminologies. *Health and Technology,* 2018, vol. 8 (5), 361-376
- Combining semantic and lexical measures to evaluate medical terms similarity. **CARDOSO S. D. ; DA SILVEIRA M. ; LIN Y.-C. ; CHRISTEN V. ; RAHM E. ; REYNAUD-DELAÎTRE C. ; PRUSKI C.** Data Integration in the Life Sciences, Lecture Notes in Computer Science. Springer International Publishing, 2018, 17-32
- Leveraging the impact of ontology evolution on semantic annotations. **CARDOSO S. D. ; PRUSKI C. ; DA SILVEIRA M. ; LIN Y.-C. ; GROSS A. ; RAHM E. ; REYNAUD- DELAÎTRE C.** European Knowledge Acquisition Workshop. Springer, 2016, 68-82
- Combining rules, background knowledge and change patterns to maintain semantic annotations. **CARDOSO S. D. ; REYNAUD-DELAÎTRE C. ; DA SILVEIRA M. ; PRUSKI C.** AMIA Annual Symposium Proceedings. American Medical Informatics Association, 2017, vol. 2017, 505
- **CARO D. ; RODRÍGUEZ M. A. ; BRISABOA N. R.** Data structures for temporal graphs based on compact sequence representations. *Inf Syst.,* 2015, vol. 51 (C), 1-26
- **CUNNINGHAM H.** *Gate, a general architecture for text engineering. Computers and the Humanities,* 2002, vol. 36 (2), 223-254
- **DA SILVEIRA M. ; DOS REIS J. ; PRUSKI C.** Management of dynamic biomedical termino- logies : current status and future challenges. *Yearbook of Medical informatics,* 2015, vol. 24 (01), 125-133
- **DEBATTY T. ; MICHIARDI P. ; MEES W.** Fast online k-nn graph building. *CoRR,* 2016
- **GUHA R. V. ; BRICKLEY D. ; MACBETH S.** Schema.org : Evolution of structured data on the web. Commun. ACM, 2016, vol. 59, 44-51
- **HARTUNG M. ; GROSS A. ; RAHM E.** Conto-diff: generation of complex evolution mappings for life science ontologies. *Journal of biomedical informatics,* 2013, vol. 46 (1), 15-32
- **JONQUET C. ; TOULET A. ; ARNAUD E. ; AUBIN S. ; YEUMO E. D. ; EMONET V. ; GRAYBEAL J. ; LAPORTE M.-A. ; MUSEN M. A. ; PESCE V. et al.** AgroPortal : A vocabulary and ontology repository for agronomy. *Computers and Electronics in Agriculture,* 2018, vol. 144, 126-143
- Efficient management of biomedical ontology versions. **KIRSTEN T. ; HARTUNG M. ; GROSS A. ; RAHM E.** On the Move to Mea- ningful Internet Systems : OTM 2009 Workshops. Springer Berlin Heidelberg, 2009, 574-583
- An overview of methods for handling evolving graph sequences. **KOSMATOPOULOS A. ; GIANNAKO-POULOU K. ; PAPADOPOULOS A. N. ; TSICHLAS K.** Revised Selected Papers of the First International Workshop on Algorithmic Aspects of Cloud Computing. Springer-Verlag, 2015, vol. 9511, 181-192

- **LABOUSEUR A. G. ; BIRNBAUM J. ; OLSEN, JR. P. W. ; SPILLANE S. R. ; VIJAYAN J. ; HWANG J.-H. ; HAN W.-S.** The G* graph database : Efficiently managing large distributed dynamic graphs. *Distrib. Parallel Databases,* 2015, vol. 33 (4), 479-514
- **LU Z.** Pubmed and beyond : a survey of web tools for searching biomedical literature. *Data- base : The Journal of Biological Databases and Curation,* 2011
- **MOFFITT V. Z. ; STOYANOVICH J.** Towards sequenced semantics for evolving graphs. *Proc. of the 20th International Conference on Extending Database Technology (EDBT),* 2017
- **NOY N. F. ; SHAH N. H. ; WHETZEL P. L. ; DAI B. ; DORF M. ; GRIFFITH N. ; JONQUET C. ; RUBIN D. L. ; STOREY M.-A. ; CHUTE C. G. et al.** BioPortal : ontologies and integrated data resources at the click of a mouse. *Nucleic acids research,* 2009, vol. 37 (2), W170-W173
- **PRUSKI C. ; DOS REIS J. C. ; DA SILVEIRA M.** Capturing the relationship between evolving biomedical concepts via background knowledge. *Proceedings of the 9th International Confe- rence Semantic Web Applications and Tools for Life Sciences,* 2016
- **PRUSKI C. ; GUELFI N. ; REYNAUD C.** Adaptive ontology-based web information retrieval : The target framework. *International Journal of Web Portals (IJWP),* 2011, vol. 3 (3), 41-58
- **SEMERTZIDIS K. ; PITOURA E.** Top-k durable graph pattern queries on temporal graphs. *IEEE Transactions on Knowledge and Data Engineering,* 2018, 1-1
- **SINGHAL A.** *Introducing the knowledge graph : Things, not strings,* 2012, https://googleblog.blogspot.co.at/2012/05/ introducing-knowledge-graph-things-not.html
- **SMITH B. ; ASHBURNER M. ; ROSSE C. ; BARD J. ; BUG W. ; CEUSTERS W. ; GOLDBERG L. J. ; EIL- BECK K. ; IRELAND A. ; MUNGALL C. J. et al.** The OBO foundry : coordinated evolution of ontologies to support biomedical data integration. *Nature biotechnology,* 2007, vol. 25 (11), 1251
- **WHETZEL P. L. ; NOY N. F. ; SHAH N. H. ; ALEXANDER P. R. ; NYULAS C. ; TUDORACHE T. ; MUSEN M. A.** Bioportal : enhanced functionality via new web services from the national center for biomedical ontology to access and use ontologies in software applications. *Nucleic acids research,* 2011, vol. 39 (2), W541-W545